# FASCICULE DE BREVET EUROPEEN

(11) **EP 2 775 197 B1**
(45) Date de publication et mention de la délivrance du brevet: **17.02.2016**
(21) Numéro de dépôt: 14155333.9
(22) Date de dépôt: 17.02.2014
(51) Int. Cl.: F21S 8/10, B60Q 1/34, F21V 8/00, G02B 6/36

(54) **Dispositif d'éclairage et/ou de signalisation pour véhicule automobile, comportant un guide de lumière**
Vorrichtung zur Beleuchtung und/oder Signalisierung für ein Kraftfahrzeug, die einen Lichtwellenleiter umfasst
Lighting and/or signalling device for a motor vehicle comprising a light guide

(30) Priorité: 04.03.2013 FR 1351900
(43) Date de publication de la demande: 10.09.2014
(73) Titulaire: Valeo Vision Belgique, 7822 Meslin l'Evêque (BE)
(72) Inventeur: Herbin, Cyril, 59530 POTELLE (FR)

(56) Documents cités:
- EP-A1- 2 292 466
- EP-A2- 2 378 323
- DE-U1-202006 003 392
- JP-A- 2010 260 545
- US-A1- 2012 069 592
- US-A1- 2012 113 660

## Description

La présente invention concerne un dispositif d'éclairage et/ou de signalisation pour un véhicule automobile, du type comportant un boîtier fermé par une glace de projecteur et à l'intérieur duquel s'étend un guide de lumière adapté à propager le faisceau émis par une source lumineuse. Elle concerne plus particulièrement les moyens de fixation d'un tel guide de lumière dans le boîtier associé.

Dans les véhicules actuels, on utilise de plus en plus fréquemment des diodes électroluminescentes qui produisent un faisceau de lumière focalisé que l'on fait réfléchir dans un guide de lumière. Ce guide doit être positionné de manière très précise pour que la face par laquelle la lumière entre dans le guide soit disposée en regard de la diode. Classiquement, on assure la position dans le boîtier du guide par rapport à la diode en prévoyant des moyens de vissage et des pièces intermédiaires.

La présence de ceux-ci présente l'inconvénient de multiplier le nombre de pièces ce qui, outre l'augmentation du coût du dispositif d'éclairage et/ou de signalisation, génère un risque supplémentaire de dispersion géométrique à l'assemblage et donc un risque de mauvais positionnement du guide de lumière par rapport à la diode.

Le document EP 2 378 323 décrit dans un projecteur un guide de lumière, dont les extrémités sont maintenues en face de LEDs par des ailettes d'une pièce intermédiaire pourvue d'une ouverture centrale entourant la LED. La partie de la pièce intermédiaire autour de l'ouverture centrale réfléchit les rayons issus de la LED dans le guide.

Le document JP 2010 260 545 décrit un feu dans lequel un guide de lumière comporte une extension formant un logement pour une LED. La LED avec son circuit imprimé forment un ensemble, maintenu sur l'extension par clippage, de manière à positionner la LED par rapport au guide de lumière.

La présente invention propose un dispositif d'éclairage et/ou de signalisation dans lequel le guide de lumière est fixé dans le boîtier avec un nombre limité de pièces, tout en assurant un positionnement optimal de ce guide par rapport à la source lumineuse.

Dans ce contexte, le dispositif d'éclairage et/ou de signalisation selon l'invention comporte un guide de lumière dont une extrémité est rapportée sur une plaque porteuse de la diode et également porteuse de circuits imprimés pour la commande électronique de cette diode. Cette extrémité du guide de lumière est d'une part maintenue en position selon deux directions perpendiculaires entre elles et parallèles au plan de la plaque de circuits imprimés, par la coopération d'une platine prolongeant l'extrémité du guide et de pions d'indexage s'étendant en saillie de la plaque de circuits imprimés. Cette extrémité est d'autre part maintenue dans la direction perpendiculaire à la plaque, en étant enserrée entre cette plaque et un masque rapporté contre la plaque et rendu solidaire du boîtier par emboîtement élastique.

On réalise ainsi la fixation de cette extrémité du guide de lumière par un empilement perpendiculairement à la plaque porteuse de la diode, et ceci sans pièce de vissage, uniquement par l'apport d'un masque formant capotage.

Selon une caractéristique de l'invention, le masque formant capotage comporte des nervures qui s'étendent en saillie de la face intérieure du masque de manière à ce que, lorsque le masque est rapporté sur le boîtier, ces nervures appuient sur la platine prolongeant l'extrémité du guide. Perpendiculairement à la plaque, l'effort exercé alors par ces nervures sur la platine tend à plaquer cette dernière contre la plaque de circuits imprimés.

Dans un mode de réalisation préféré de l'invention, l'extrémité opposée du guide de lumière est montée à force dans le boîtier, et comporte à cet effet, une patte de fixation, adaptée à s'engager dans un logement du boîtier.

La patte de fixation peut comporter en saillie un tenon, de forme complémentaire à la forme d'une rainure réalisée dans la cavité du boîtier. On arrangera avantageusement l'orientation de la patte et de la cavité, ainsi que celle du tenon et de la rainure pour que le montage à force de la patte dans la cavité bloque efficacement la position de l'extrémité opposée contre la plaque de circuits imprimés porteuse de la diode.

Ainsi, on réalise la fixation d'un guide de lumière dans un dispositif d'éclairage et/ou de signalisation selon l'invention sans qu'il soit nécessaire de prévoir d'outil et d'élément de vissage spécifique.

L'invention concerne également un procédé de montage du dispositif d'éclairage et/ou de signalisation selon l'invention, dans lequel on pré-positionne chacune des extrémités du guide de lumière, la première extrémité porteuse de la patte de fixation étant positionnée de manière à ce que cette patte soit logée dans la cavité formée dans le boîtier à cet effet, tandis que la deuxième extrémité est positionnée de manière à ce que les trous formés dans la platine de fixation s'enfilent autour des pions d'indexage. On emboîte alors à force, par déformation élastique, la première extrémité dans le boîtier, et on rapporte dans un troisième temps le masque formant capotage autour de la deuxième extrémité, en le plaquant contre la plaque porteuse de la diode selon une direction axiale correspondant à la direction du guide de lumière. On fixe par déformation élastique le masque contre le boîtier, de telle sorte que le capot pousse la platine du guide de lumière contre la plaque porteuse de la diode.

L'invention sera maintenant plus complètement décrite en référence aux figures annexées, parmi lesquelles :
- la figure 1 est une représentation schématique du dispositif d'éclairage et/ou de signalisation selon l'invention, dans son application à un phare avant gauche de véhicule automobile ;
- la figure 2 illustre une vue d'ensemble, de face, du dispositif d'éclairage et/ou de signalisation sans sa glace de projection, dans lequel on peut observer notamment le boîtier, le guide de lumière fixé sur celui-ci, et le masque de capotage ;
- la figure 3 illustre une paroi du boîtier de la figure 2, sur laquelle est rapportée une plaque de circuits imprimés porteuse de la source lumineuse fixée sur le boîtier;
- la figure 4 est une vue semblable à la figure 3, qui illustre en outre une extrémité distale du guide de lumière rapportée sur la plaque de circuits imprimés ;
- la figure 5 est une vue en perspective de l'extrémité distale du guide de lumière, la face visible étant celle adaptée à être rapportée contre la plaque de circuits imprimés ;
- la figure 6 est une vue en coupe illustrant l'extrémité distale du guide de lumière plaqué contre le boîtier par un masque de capotage ;
- la figure 7 est une vue de détail de la figure 1, illustrant plus précisément la paroi du boîtier sur laquelle est fixée la plaque de circuits imprimés, l'extrémité distale du guide de lumière et le masque de capotage associé ;
- les figures 8 et 9 sont des vues en perspective du masque de capotage seul, depuis respectivement l'intérieur et l'extérieur du masque ;
- les figures 10 et 11 illustrent le guide de lumière seul, respectivement dans une vue en perspective avant et une vue perspective arrière ;
- la figure 12 est une vue de détail de la deuxième extrémité du guide de lumière ;
- les figures 13 et 14 sont des vues de face et de coupe de la coopération de la deuxième extrémité du guide avec le boîtier lorsque le guide est clippé à force dans le boîtier, et
- la figure 15 est une vue illustrant la forme du logement du boîtier adapté à recevoir la deuxième extrémité du guide de lumière.

Tel qu'illustré sur les figures, le dispositif d'éclairage et/ou de signalisation 2 d'un véhicule automobile comporte selon l'invention un boîtier 4 et une glace de projection 6 qui vient fermer ce boîtier. Il comporte en outre un guide de lumière 8 adapté à diffuser la lumière émise par une source lumineuse présente dans le boîtier, ici une diode électroluminescente 10 montée sur une plaque de circuits imprimés 12 fixée sur un côté du boîtier. Le dispositif comporte en outre des moyens adaptés pour le positionnement et la fixation du guide de lumière dans le boîtier.

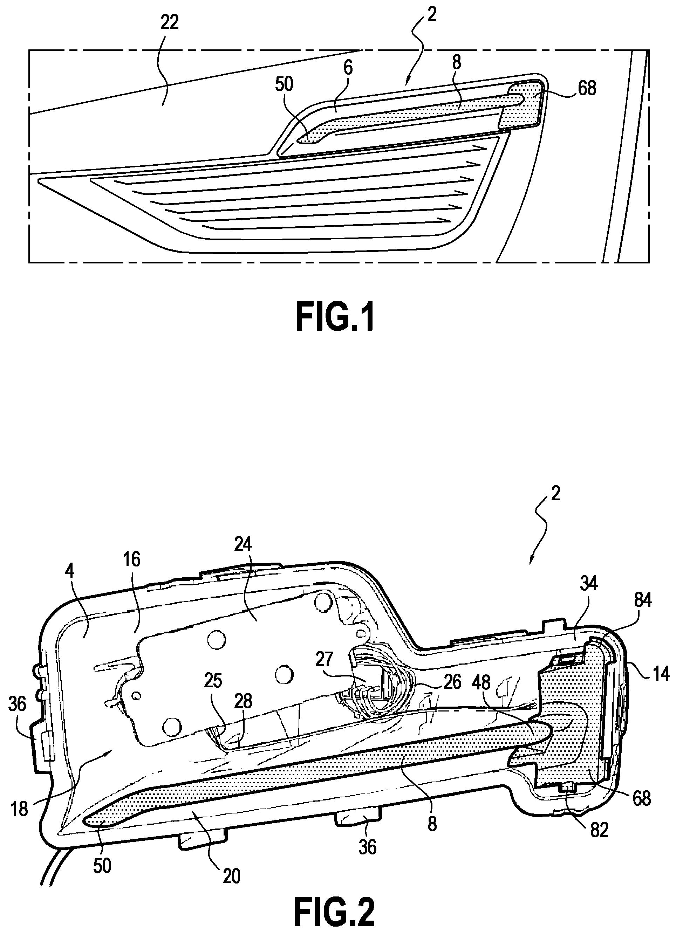

Le boîtier comporte quatre parois 14 qui prolongent sensiblement perpendiculairement un fond 16 à profondeur variable, définissant deux zones fonctionnelles de profondeurs différentes. Une première zone 18 est ainsi creusée pour recevoir des organes de commande tandis qu'une deuxième zone moins profonde porte des premiers moyens de positionnement du guide de lumière. Le boîtier est monté sur la structure du véhicule, recouvert en partie par la carrosserie du véhicule 22 de manière à ne laisser qu'une partie visible (par exemple dans le cas illustré sur la figure 1 d'un phare avant gauche) qui correspond à la deuxième zone dans laquelle est logé le guide de lumière.

La première zone du boîtier plus profonde est adaptée à recevoir un module de commande 24 de la source de lumière, ainsi que des premiers câbles de connexion 25 adaptés à relier le module de commande à la source de lumière et des seconds câbles de connexion 26 adaptés à relier ce module de commande à une alimentation extérieure au dispositif via un bouchon de connexion 27 qui s'étend au travers du fond du boîtier. Le module de commande est fixé de façon classique dans le fond du boîtier et on prévoit dans cette première zone des crochets de fixation 28 pour les premiers câbles.

Les premiers moyens de positionnement du guide comportent une gouttière 30 et une cavité 32 formée dans cette dernière. La gouttière est suffisamment creuse pour recevoir le guide de lumière sans que celui-ci n'empêche la fermeture du boîtier par le collage de la glace de projection, et la cavité présente une forme adaptée à recevoir une patte de fixation solidaire du guide de lumière, dans un agencement qui sera décrit ci-après.

Le boîtier comporte également sur son pourtour une gorge 34 creusée dans la face supérieure des parois. Cette gorge permet la mise en place de la glace de projection et sa fixation par collage par l'intermédiaire d'une nervure venue de matière avec la paroi de la glace et adaptée à être logée dans la gorge dans laquelle on a préalablement disposé un ruban de colle. Par ailleurs, une des parois présente une face supérieure usinée de sorte que la gorge de collage est interrompue par des coupures 35 dans lesquelles la face supérieure s'étend à la même hauteur que le fond de la gorge de collage. Ces coupures facilitent la mise en place de moyens de fixation du guide de lumière, tel que cela sera décrit ci-après.

Le boîtier comporte en outre des pattes de fixation 36 qui prolongent radialement la face extérieure des parois et qui permettent la mise en place et la fixation du dispositif sur la structure du véhicule automobile.

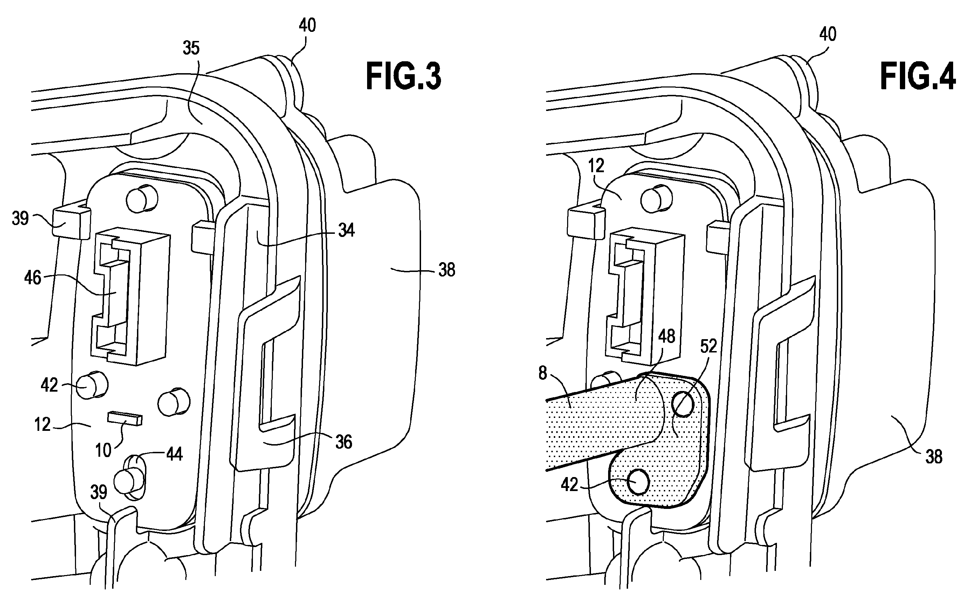

Une paroi du boîtier présente une ouverture et un ensemble électronique est fixé sur cette paroi. L'ensemble électronique comporte la plaque de circuits imprimés 12 qui est fixée sur un radiateur 38 traversant la paroi du boîtier au niveau de l'ouverture de manière à ce que la plaque de circuits imprimés s'étende à l'intérieur du boîtier. Des butées 39 (notamment visibles sur la figure 3) sont formées en prolongement de la face intérieure de la paroi du boîtier pour être disposées partiellement en travers de l'ouverture, de manière à former une butée de fin de course au déplacement de l'ensemble électronique lorsque le radiateur est enfilé à travers l'ouverture de la paroi. Le radiateur est maintenu en position sur le boîtier par des vis 40 rapportées par l'extérieur du boîtier.

La face du radiateur contre laquelle repose la plaque de circuits imprimés comporte plusieurs pions d'indexage 42 qui s'étendent perpendiculairement en saillie du radiateur, et qui traversent la plaque de circuits imprimés à travers des trous de guidage 44 réalisés dans cette plaque. Tel que cela va être décrit ci-après, ces pions d'indexage forment des seconds moyens de positionnement du guide de lumière.

La plaque de circuits imprimés comporte dans sa partie supérieure une fiche de connexion 46 pour les premiers câbles de connexion reliés au module de commande, et elle comporte dans sa partie inférieure la source lumineuse qui est ici une diode électroluminescente 10. Cette diode est orientée pour émettre un faisceau lumineux vers l'intérieur du boîtier, sensiblement perpendiculairement à la plaque de circuits imprimés. La position de la diode est assurée perpendiculairement et parallèlement au plan de la plaque à la fois par les butées 39 et par les vis rapportées par l'extérieur du boîtier. On comprendra que sans sortir du contexte de l'invention, on peut prévoir d'équiper le boîtier avec plus d'une diode rapportée sur la plaque, dès lors que la position de ces diodes est assurée pour que les faisceaux issus des diodes soient correctement collectés dans le guide de lumière.

Le guide de lumière 8 présente une forme de tube, ici courbé pour suivre le galbe du véhicule dans une application à un phare avant. Le guide est plaqué dans la gouttière qui s'étend le long de la deuxième zone du boîtier. On distingue une portion arrière du tube, adaptée à être au contact du boîtier, et une portion avant, adaptée à être tournée vers la glace de projection. Le guide comporte une extrémité disposée en regard de la diode électroluminescente, dite extrémité distale 48, et une extrémité opposée dite extrémité proximale 50.

L'extrémité distale présente une platine 52 qui prolonge perpendiculairement le tube. La platine comporte des trous d'indexage 54 adaptés à être enfilés autour d'au moins deux pions d'indexage disposés en saillie de la plaque de circuits imprimés. La platine présente une face extérieure 56, tournée à l'opposée du guide, c'est à dire vers la plaque de circuits imprimés, qui porte trois bossages 58 formant chacun un contact ponctuel entre la platine et la plaque de circuits imprimés sur laquelle la platine est rapportée.

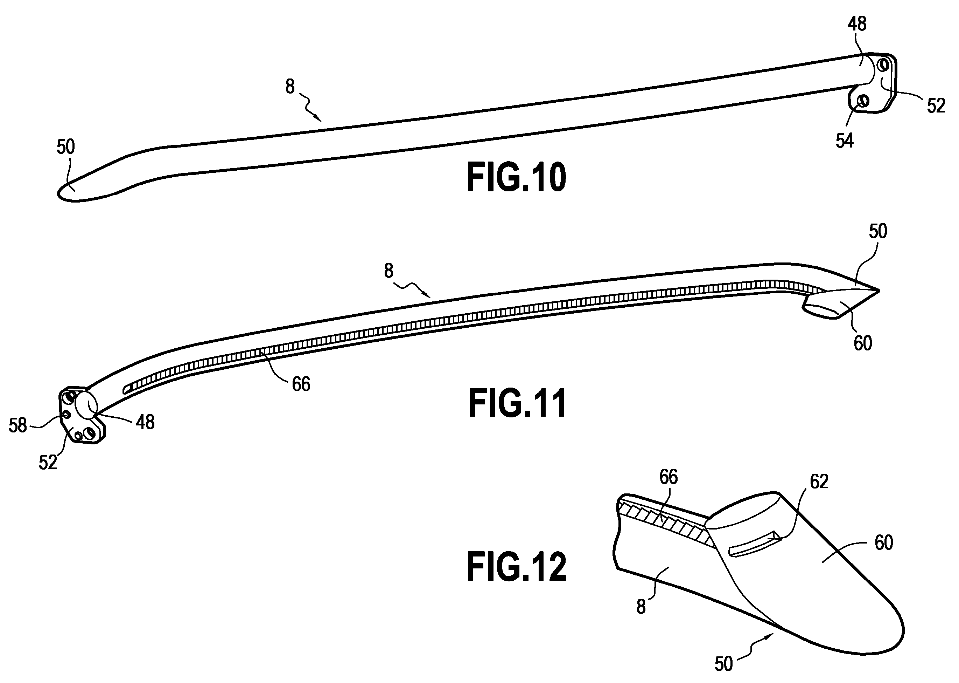

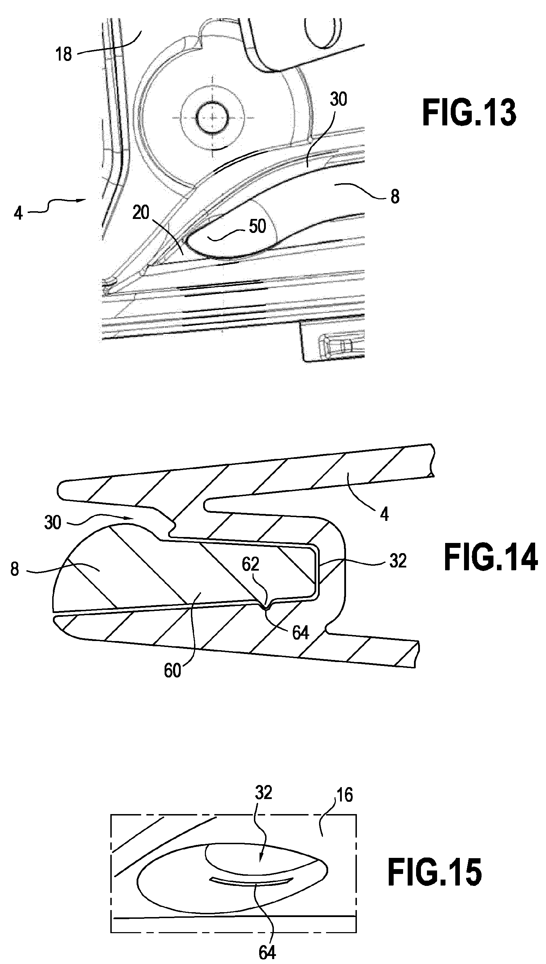

L'extrémité proximale comporte une patte de guidage 60 qui prolonge radialement cette extrémité, en étant orientée de telle sorte que la patte est tournée vers le boîtier lorsque le guide de lumière est plaqué contre celui-ci. La patte de guidage est ainsi adaptée à se loger dans la cavité formée dans le boîtier. Tel qu'illustré sur les figures 12 à 14, la patte de guidage présente sur une face un tenon 62, adapté à coopérer avec une rainure 64 qui est agencée dans la cavité de réception du boîtier et qui présente une forme correspondante à celle du tenon. La rainure et le tenon sont orientés transversalement à la direction d'introduction de la patte de guidage dans la cavité, de manière à ce que l'emboîtement élastique de l'un dans l'autre s'oppose à la séparation de la patte de guidage et de la cavité. Avantageusement, l'orientation de la patte de guidage et de la cavité correspondante est perpendiculaire au plan de la platine de l'extrémité distale du guide de lumière. Ainsi, tel que cela sera décrit ci-après, on réalise simultanément le pré positionnement de la patte de guidage dans la cavité et celui de la platine par rapport aux poins d'indexage par un même mouvement latéral du guide de lumière.

Pour réaliser cette orientation de la patte de guidage, l'extrémité proximale tend à repiquer vers l'extrémité distale en offrant une extrémité saillante. On comprendra alors que l'on peut prévoir des moyens pour éviter une zone de trop forte luminosité à cette extrémité saillante. Si une solution peut être de prévoir un logement formé dans le fond avec le boîtier, on pourra également de peindre l'extrémité pour la rendre plus opaque.

Le guide de lumière comporte des stries 66 qui sont formées dans le volume du guide, le long de la portion arrière du guide de lumière qui est en appui contre le boîtier. Ces stries permettent d'agir sur le trajet du faisceau lumineux qui se propage à l'intérieur du guide de lumière, en réfléchissant celui-ci vers la portion avant du guide avec un angle tel que le faisceau est partiellement réfracté pour sortir du dispositif de signalisation et/ou d'éclairage selon une direction souhaitée. La portion avant du guide, sans strie, forme la face de sortie de la lumière.

Selon une caractéristique préférée de l'invention, l'extrémité distale 48 du guide de lumière 8 est fixée sur le boîtier 4 par l'intermédiaire d'un masque 68 formant capotage. Ce masque est adapté à venir se fixer par emboîtement élastique sur le boîtier. De la sorte le masque est rapporté contre la plaque de circuits imprimés 12 en prenant en sandwich, entre sa face intérieure et la plaque, la platine 52 solidaire de l'extrémité distale du guide de lumière, après que celle-ci ait été mise en position par la coopération des trous et des pions d'indexage.

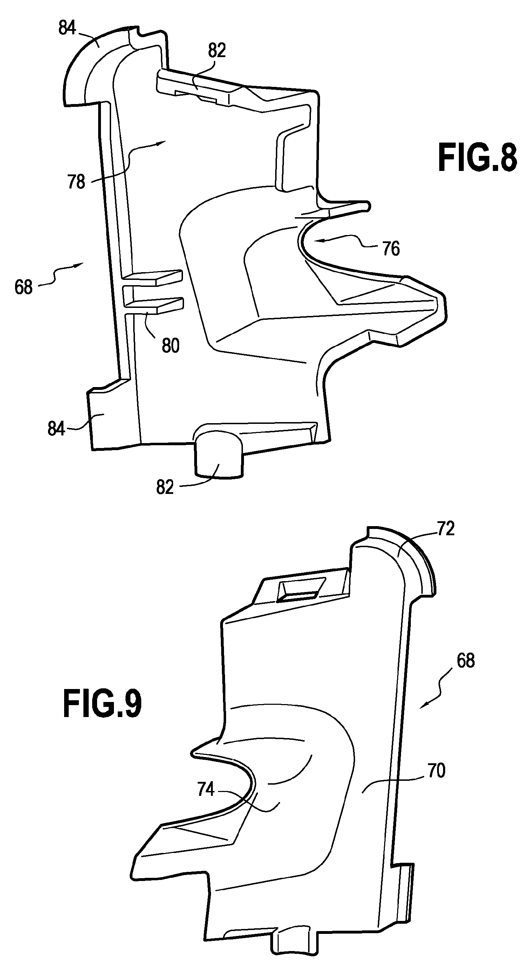

Le masque, tel qu'il est particulièrement visible sur les figures 8 et 9, présente une partie centrale plane 70, adaptée à recouvrir la plaque de circuits imprimés, des parties périphériques de fixation 72 et une partie galbée 74 adaptée à recouvrir l'extrémité distale du guide de lumière.

La partie centrale plane présente une face extérieure tournée vers la glace de projection et une face intérieure 78 tournée vers le fond du boîtier. Tel que cela est visible sur la figure 8, deux nervures 80 s'étendent en saillie de la face intérieure du masque. Elles offrent ainsi une zone rigidifiée adaptée à former appui contre la platine de fixation lorsque le masque est empilé contre la plaque de circuits imprimés.

Les parties périphériques du masque présentent des clips de fixation 82, et des bords tombés munis à leur extrémité de pattes 84. Les clips de fixation comportent un clip inférieur et un clip supérieur qui coopèrent avec des languettes de forme correspondantes disposées sur le boîtier. La coopération des clips et des languettes génère le maintien en position du masque par rapport au boîtier, en plaquant celui-ci contre le boîtier et contre la plaque de circuits imprimés disposée sous le masque. Les pattes présentent des formes adaptées à être disposées dans la gorge de collage du boîtier, au niveau des "coupures" précédemment décrites. Ces pattes sont ainsi affleurantes avec le reste de la gorge et elles ne gênent pas le collage de la glace sur le boîtier, qui au contraire favorise le maintien en position du masque par rapport au boîtier.

La partie galbée comporte une encoche 76 pour laisser passage du guide de lumière et elle présente un profil adapté à recouvrir la forme courbée du guide de lumière dans sa partie d'extrémité distale.

On va maintenant décrire le procédé de montage du dispositif d'éclairage et/ou de signalisation de signalisation selon l'invention.

On rapporte dans le boîtier l'ensemble des composants électroniques, à savoir le module de commande, et les câbles de connexion, ainsi que l'ensemble électronique formé par la plaque de circuits pré-imprimés montée sur le boîtier par l'intermédiaire du radiateur, dont les pattes de fixation sont vissées à l'extérieur du boîtier.

Le guide de lumière est alors positionné à l'extrémité proximale en faisant coopérer la patte de fixation solidaire de l'extrémité du guide dans la cavité formée dans le boîtier, et simultanément en faisant coopérer à l'autre extrémité du guide les trous d'indexage de la platine de fixation avec les pions d'indexage solidaires de l'ensemble électronique. On positionne ainsi le guide dans le boîtier.

On procède alors à la fixation du guide et on réalise pour cela dans un premier temps le montage par emmanchement à force de la patte de fixation dans la cavité, en faisant coopérer le tenon de la patte de fixation dans la rainure.

On rapporte ensuite le masque sur la plaque de circuits imprimés, en emboîtant par déformation élastique ce masque sur les languettes correspondantes du boîtier. Cet assemblage plaque le masque contre la platine et les nervures internes du masque portent un effort sur la platine de fixation du guide de lumière. On réalise de la sorte un empilement de pièces selon la direction transversale du guide de lumière, la platine de fixation solidaire du guide étant alors pris en sandwich entre le masque et le boîtier, ce qui fixe la position du guide par rapport au boîtier.

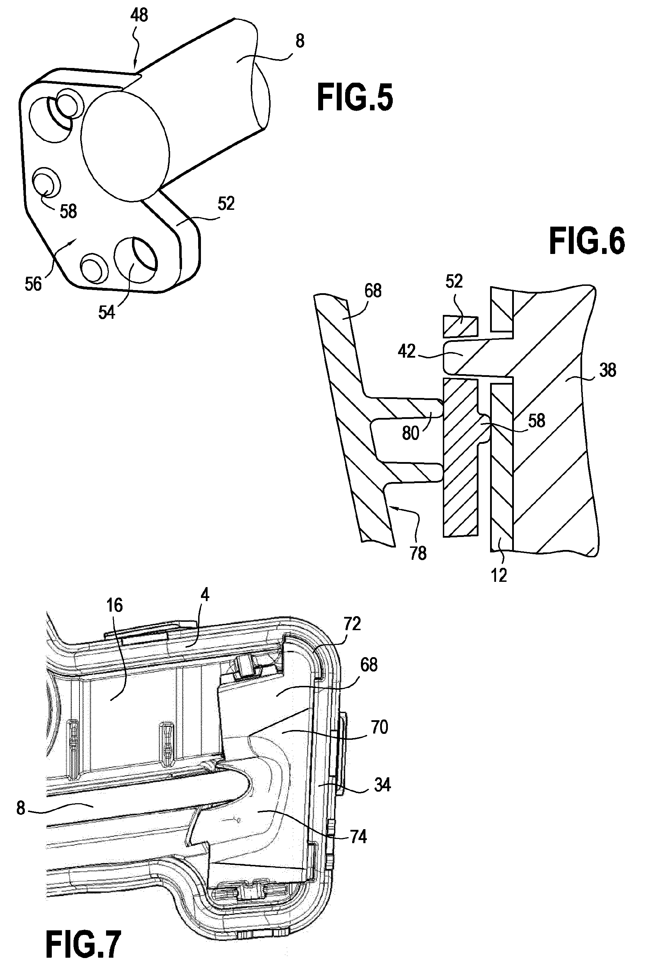

Tel que cela est particulièrement visible sur la figure 6, la platine de fixation, et donc le guide de lumière dont elle est le prolongement transversal, est bloquée entre la plaque de circuits imprimés et le masque. Les nervures 80 appuient axialement sur la face intérieure de la platine et les bossages disposés sur la face extérieure opposée appuient à leur tour sur la plaque de circuits imprimés, rendue fixe par rapport au boîtier.

L'extrémité distale du guide de lumière est ainsi maintenue en position selon la direction perpendiculaire à la plaque de circuits imprimés, ce qui en complément de la coopération des trous et des pions d'indexage, bloque la position du guide de lumière dans les trois directions, à savoir les directions verticale et transversale par l'effet des moyens d'indexage, et la direction longitudinale par l'effet de l'empilement par recouvrement du masque. Pour cela, on s'assure que l'empilement crée par la fixation du masque contre le boîtier génère un effort sur la platine qui soit selon un axe parallèle à l'axe des pions d'indexage.

On comprendra qu'il est particulièrement avantageux ici d'avoir le guide de lumière fixé à chaque côté sans outil et sans moyen de vissage. Ceci permet de limiter le nombres de pièces nécessaires et de faciliter les opérations de montage. Toutefois on pourra envisager, sans sortir du contexte de l'invention que l'extrémité proximale soit fixée par d'autres moyens qu'un emmanchement à force, et par exemple par la présence d'un masque rapporté sur l'extrémité. En effet, s'il est particulièrement avantageux que les deux extrémités soient fixées en combinaison par emmanchement à déformation élastique, la fixation de l'extrémité distale par un empilement axial par l'intermédiaire d'un masque de fixation clipsé sur le boîtier présente suffisamment d'avantages quant à la réduction du nombre de pièces et du poids de l'ensemble pour être utilisé avantageusement indépendamment du type de fixation choisi pour l'autre extrémité.

## Revendications

1. Dispositif d'éclairage et/ou de signalisation comportant un boîtier (4) fermé par une glace (6) et à l'intérieur duquel est disposée une plaque de circuits imprimés (12) fixée sur une paroi du boîtier, ladite plaque portant une diode électroluminescente (10) adaptée à émettre un faisceau lumineux que propage un guide de lumière (8) disposé en regard de ladite diode et qui s'étend dans le boîtier le long de ladite glace, **caractérisé en ce qu'**une extrémité distale (48) du guide de lumière comporte une platine de fixation (52) munie de trous d'indexage (54) coopérant avec des pions d'indexage (42) s'étendant axialement en saillie de la plaque de circuits imprimés et **en ce qu'**un masque (68) est fixé sur ladite paroi du boîtier en recouvrant ladite extrémité distale du guide de lumière de telle sorte que la platine solidaire du guide est enserrée entre le masque et la plaque de circuits imprimés de manière à assurer le maintien en position du guide par empilement axial de pièces, parallèlement à l'axe des pions d'indexage.

2. Dispositif selon la revendication 1, **caractérisé en ce que** le masque (68) comporte des moyens de fixation par déformation élastique (82) coopérant avec des moyens complémentaires portés par le boîtier (4), de sorte que le masque est plaqué contre la platine de fixation (52) solidaire du guide de lumière (8) lorsqu'il est fixé sur le boîtier.

3. Dispositif selon la revendication 1, **caractérisé en ce que** le masque (68) présente une face intérieure (78), étant tournée vers la platine de fixation (52), ladite face intérieure (78) comportant des nervures (80) agencées de sorte qu'elles portent sur la platine de fixation lorsque le masque est fixé sur le boîtier (4).

4. Dispositif selon l'une des revendications précédentes, **caractérisé en ce que** la platine de fixation (52) présente sur sa face opposée au guide de lumière (8) des bossages (58) entrant en contact avec la plaque de circuits imprimés (12) sous l'effort exercé par le masque (68).

5. Dispositif selon l'une des revendications précédentes, **caractérisé en ce que** l'extrémité opposée (50) du guide de lumière (8) présente une patte de guidage (60) étant emmanchée à force dans une cavité (32) formée dans le boîtier (4).

6. Dispositif selon la revendication 5, **caractérisé en ce que** la patte de guidage (60) porte un tenon (62) coopérant avec une rainure (64) formée dans ladite cavité (32).

7. Dispositif selon la revendication 6, **caractérisé en ce que** ladite patte de guidage (60) et ladite cavité (32) s'étendent sensiblement parallèlement à l'axe des pions d'indexage (42).

8. Dispositif selon la revendication 6 ou 7, **caractérisé en ce que** la rainure (64) et le tenon (62) s'étendent sensiblement perpendiculairement à l'axe de la patte de guidage (60) et de la cavité (32).

9. Dispositif selon l'une des revendications précédentes, **caractérisé en ce que** des stries (66) sont formées à l'intérieur du guide de lumière (8), sur la paroi du guide adaptée à être en contact avec le boîtier (4).

10. Dispositif selon l'une des revendications précédentes, **caractérisé en ce que** ladite plaque de circuits imprimés (12) est rendue solidaire d'un radiateur (38) qui traverse ladite paroi du boîtier et qui est fixé par vissage à l'extérieur du boîtier.

11. Procédé de montage d'un dispositif d'éclairage et/ou de signalisation selon la revendication 1, **caractérisé en ce qu'**il comporte les étapes suivantes :
- on pré-positionne chacune des extrémités du guide de lumière (8), l'extrémité distale du guide (48) étant positionnée de manière à ce que des trous d'indexage (54) formés dans la platine de fixation (52) s'enfilent autour des pions d'indexage (42) tandis que l'extrémité opposée du guide (50), porteuse d'une patte de guidage (60), est positionnée de manière à ce que cette patte soit logée dans une cavité (32) formée dans le boîtier ;
- on emmanche à force la patte de guidage dans la cavité ;
- on rapporte le masque formant capotage (68) autour de l'extrémité distale du guide de lumière, et
- on fixe à force, par déformation élastique, le masque sur le boîtier, de telle sorte que ledit masque pousse la platine du guide de lumière contre la plaque porteuse de la diode en formant un empilement axial parallèlement à l'axe des pions d'indexage.

## Patentansprüche

1. Beleuchtungs- und/oder Signalgebungsvorrichtung mit einem Gehäuse (4), das durch eine Abdeckscheibe (6) geschlossen und in dessen Inneren eine Leiterplatte (12) angeordnet ist, die auf einer Wand des Gehäuses befestigt ist, wobei die Leiterplatte eine Leuchtdiode (10) trägt, die ein Lichtbündel zu emittieren vermag, das ein gegenüber der Diode angeordneter Lichtleiter (8) verbreitet, der im Gehäuse entlang der Scheibe verläuft,
**dadurch gekennzeichnet, dass** ein distales Ende (48) des Lichtleiters eine Befestigungsplatte (52) aufweist, die mit Positionierungslöchern (54) versehen ist, die mit Positionierungsstiften (42) zusammenwirken, welche sich von der Leiterplatte vorstehend axial erstrecken, und dass eine Abdeckmaske (68) auf der Wand des Gehäuses befestigt ist und dabei das distale Ende des Lichtleiters derart verdeckt, dass die mit dem Lichtleiter fest verbundene Platte zwischen der Abdeckmaske und der Leiterplatte solchermaßen eingeklemmt ist, dass gewährleistet ist, dass der Lichtleiter durch axiales Übereinanderstapeln von Teilen parallel zu Achse der Positionierungsstifte in dieser Position gehalten wird.

2. Vorrichtung nach Anspruch 1,
**dadurch gekennzeichnet, dass** die Abdeckmaske (68) Mittel zum Befestigen (82) durch elastische Verformung aufweist, die mit vom Gehäuse (4) getragenen komplementären Mitteln solchermaßen zusammenwirken, dass die Abdeckmaske gegen die mit dem Lichtleiter (8) fest verbundene Befestigungsplatte (52) gedrückt wird, wenn dieser am Gehäuse befestigt ist.

3. Vorrichtung nach Anspruch 1,
**dadurch gekennzeichnet, dass** die Abdeckmaske (68) eine der Befestigungsplatte (52) zugewandte Innenseite (78) aufweist, wobei die Innenseite (78) Rippen (80) aufweist, die solchermaßen angeordnet sind, dass sie auf der Befestigungsplatte ruhen, wenn die Abdeckmaske am Gehäuse (4) befestigt ist.

4. Vorrichtung nach einem der vorhergehenden Ansprüche,
**dadurch gekennzeichnet, dass** die Befestigungsplatte (52) auf ihrer dem Lichtleiter (8) abgewandten Seite Vorwölbungen (58) aufweist, die mit der Leiterplatte (12) unter Einwirkung der durch die Abdeckmaske (68) ausgeübten Kraft in Kontakt gelangen.

5. Vorrichtung nach einem der vorhergehenden Ansprüche,
**dadurch gekennzeichnet, dass** das entgegensetzte Ende (50) des Lichtleiters (8) eine Führungsklaue (60) aufweist, die in eine in dem Gehäuse (4) ausgebildete Höhlung (32) unter Kraftaufwand hineingedrückt wird.

6. Vorrichtung nach Anspruch 5,
**dadurch gekennzeichnet, dass** die Führungsklaue (60) einen Zapfen (62) trägt, der mit einer in der Höhlung (32) ausgebildeten Nut (64) zusammenwirkt.

7. Vorrichtung nach Anspruch 6,
**dadurch gekennzeichnet, dass** sich die Führungsklaue (60) und die Höhlung (32) im Wesentlichen parallel zur Achse der Positionierungsstifte (42) erstrecken.

8. Vorrichtung nach Anspruch 6 oder 7,
**dadurch gekennzeichnet, dass** sich die Nut (64) und der Zapfen (62) im Wesentlichen senkrecht zur Achse der Führungsklaue (60) und der Höhlung (32) erstrecken.

9. Vorrichtung nach einem der vorhergehenden Ansprüche,
**dadurch gekennzeichnet, dass** innen im Lichtleiter (8) auf der Wand des Lichtleiters, die dazu ausgebildet ist, mit dem Gehäuse (4) in Kontakt zu sein, Rillen (66) ausgebildet sind.

10. Vorrichtung nach einem der vorhergehenden Ansprüche,
**dadurch gekennzeichnet, dass** die Leiterplatte (12) mit einem Kühlkörper (38) fest verbunden ist, der die Wand des Gehäuses durchquert und außen am Gehäuse durch Verschraubung befestigt ist.

11. Verfahren zur Montage einer Beleuchtungs- und/oder Signalgebungsvorrichtung nach Anspruch 1,
**dadurch gekennzeichnet, dass** es die folgenden Schritte umfasst:
- Vorpositionieren eines jeden Endes des Lichtleiters (8), wobei das distale Ende des Lichtleiters (48) solchermaßen positioniert ist, dass sich in der Befestigungsplatte (52) ausgebildete Positionierungslöcher (54) um Positionierungsstifte (42) herum aneinanderreihen, während das eine Führungsklaue (60) tragende entgegengesetzte Ende des Lichtleiters (50) solchermaßen positioniert ist, dass die Klaue in einer im Gehäuse ausgebildeten Höhlung (32) lagert;
- Hineindrücken der Führungsklaue in die Höhlung unter Kraftaufwand;
- Aufsetzen der die Abdeckung bildenden Maske (68) um das distale Ende des Lichtleiters herum; und
- Befestigen der Abdeckmaske unter Kraftaufwand durch elastische Verformung auf dem Gehäuse, derart, dass die Abdeckmaske die Platte des Lichtleiters unter Bildung eines zur Achse der Positionierungsstifte parallelen axialen Stapels gegen die die Diode tragende Platte drückt.

## Claims

1. Lighting and/or signalling device comprising a housing (4) closed by a lens (6) and inside which a printed circuit board (12) is disposed, fixed to one wall of the housing, said board carrying a light-emitting diode (10) suitable for emitting a light beam propagated by a light guide (8) disposed opposite said diode and which extends in the housing along said lens, **characterised in that** a distal end (48) of the light guide comprises a fixing plate (52) provided with positive-location holes (54) cooperating with positive-location pins (42) extending axially so as to project from the printed circuit board, and **in that** a mask (68) is fixed to said wall of the housing, covering said distal end of the light guide so that the plate fixed to the guide is gripped between the mask and the printed circuit board so as to hold the guide in position by axial stacking of parts, parallel to the axis of the positive-location pins.

2. Device according to claim 1, **characterised in that** the mask (68) comprises means for fixing by elastic deformation (82), cooperating with complementary means carried by the housing (4), so that the mask is pressed against the fixing plate (52) secured to the light guide (8) when it is fixed to the housing.

3. Device according to claim 1, **characterised in that** the mask (68) has an internal face (68), being turned towards the fixing plate (52), said internal face (78) comprising ribs (80) arranged so that they bear on the fixing plate when the mask is fixed to the housing (4).

4. Device according to one of the preceding claims, **characterised in that** the fixing plate (52) has, on its face opposite to the light guide (8), protrusions (58) coming into contact with the printed circuit board (12) under the force exerted by the mask (68).

5. Device according to one of the preceding claims, **characterised in that** the opposite end (50) of the light guide (8) has a guide lug (60), force-fitted in a cavity (32) formed in the housing (4).

6. Device according to claim 5, **characterised in that** the guide lug (60) carries a tenon (62) cooperating with a groove (64) formed in said cavity (32).

7. Device according to claim 6, **characterised in that** said guide lug (60) and said cavity (32) extend substantially parallel to the axis of the positive-location pins (42).

8. Device according to claim 6 or 7, **characterised in that** the groove (64) and tenon (62) extend substantially perpendicular to the axis of the guide lug (60) and of the cavity (32).

9. Device according to one of the preceding claims, **characterised in that** serrations (66) are formed inside the light guide (8), on the wall of the guide suitable for being in contact with the housing (4).

10. Device according to one of the preceding claims, **characterised in that** said printed circuit board (12) is secured to a radiator (38) that passes through said wall of the housing and is fixed by screwing to the outside of the housing.

11. Method for assembling a lighting and/or signalling device according to claim 1, **characterised in that** it comprises the following steps:
- each of the ends of the light guide (8) is pre-positioned, the distal end of the guide (48) being positioned so that positive-location holes (54) formed in the fixing plate (52) fit around the positive-location pins (42) while the opposite end of the guide (50), carrying a guide lug (60), is positioned so that this lug is housed in a cavity (32) formed in the housing;
- the guide lug is force-fitted in the cavity;
- the mask forming a cowl (68) is attached around the distal end of the light guide, and
- the mask is force-fitted on the housing by elastic deformation so that said mask pushes the plate of the light guide against the board carrying the diode while forming an axial stack parallel to the axis of the positive-location pins.
